# EUROPEAN PATENT SPECIFICATION

(11) **EP 3 396 908 B1**
(45) Date of publication and mention of the grant of the patent: **17.07.2019**
(21) Application number: 17168048.1
(22) Date of filing: 25.04.2017
(51) Int. Cl.: H04L 12/801, H04L 12/707, H04L 12/875, H04L 12/927, H04L 12/803, H04L 29/06

(54) **BONDING DEVICE FOR SCHEDULING A DISTRIBUTION OF DATA PACKETS OVER ACCESS LINKS**
VERBINDUNGSVORRICHTUNG ZUR PLANUNG EINER VERTEILUNG VON DATENPAKETEN ÜBER ZUGANGSVERBINDUNGEN
DISPOSITIF DE LIAISON SERVANT À PROGRAMMER UNE DISTRIBUTION DE PAQUETS DE DONNÉES SUR DES LIAISONS D'ACCÈS

(43) Date of publication of application: 31.10.2018
(73) Proprietor: Deutsche Telekom AG, 53113 Bonn (DE)
(72) Inventor: Bayer, Nico, 61231 Bad Nauheim (DE); Monath, Thomas, 23923 Schönberg (DE); Baumgarten, Benjamin, 53639 Königswinter (DE)
(74) Representative: Patentship Patentanwaltsgesellschaft mbH

(56) References cited:
- EP-A1- 1 383 284
- EP-A1- 1 678 892
- CA-A1- 2 897 772
- US-A1- 2008 311 855
- ATHINA MARKOPOULOU ET AL: "The Case for Redundant Arrays of Internet Links (RAIL)", ARXIV.ORG, CORNELL UNIVERSITY LIBRARY, 201 OLIN LIBRARY CORNELL UNIVERSITY ITHACA, NY 14853, 21 January 2007 (2007-01-21), XP080269655,
- LIQUN LI ET AL: "A Quality-Aware Voice Streaming System for Wireless Sensor Networks", ACM TRANSACTIONS ON SENSOR NETWORKS, ACM, 2 PENN PLAZA, SUITE 701 NEW YORK NY 10121-0701 USA, vol. 10, no. 4, 1 June 2014 (2014-06-01), pages 1-25, XP058051232, ISSN: 1550-4859, DOI: 10.1145/2594775

## Description

### TECHNICAL FIELD

The present disclosure relates to a bonding device, e.g. a bonding client and/or a bonding server with a scheduling module, in particular a neuronal network, for scheduling a distribution of data packets over a plurality of access links according to a scheduling scheme and a method for transmission of data packets between such a bonding client and a bonding server. In particular, the disclosure relates to techniques for improving quality of real-time multimedia applications in access bundling scenarios.

### BACKGROUND

Nowadays, more products utilising channel bonding approaches are introduced and used on the market. Examples are the "Hybrid Access" product according to "http://www.telekom.de/privatkunden/zuhause/internet-und-fernsehen/das-ist-hybrid" or custom solutions, e.g. according to "https://www.viprinet.com/de".

The main goal of these products is to increase the available bandwidth for subscribers. These goals are achieved by bonding resources of different access technologies. However, improving the available bandwidth may not always have a positive impact on the quality of real-time applications, e.g. voice over IP (VoIP). These types of services do not profit from increased bandwidth as they usually have a fixed bandwidth but they are sensitive to loss and delay jitter.

Publication Athina Markopoulou et al: "The Case for Redundant Arrays of Internet Links (RAIL)", Cornell University Library, 201 Olin Library Cornell University Ithaca, NY 14853, 21 January 2007 describes a connection of two or more local-area networks via a Redundant Array of Internet Links (RAIL) to solve performance and reliability problems of wide-area networks with respect to Voice-over-IP and TCP traffic.

Publication Liqun Li et al: "A quality-aware voice streaming system for wireless sensor networks", ACM Transactions on sensor networks, ACM, 2 Penn Plaza, Suite 701 New York USA, vol. 10, no. 4, 1 June 2014, pages 1-25 describes teaches a voice quality model based on a mean opinion score (MOS) value to measure quality of voice.

Document US 2008/0311855 A1 describes to use feedback information related to the quality of service delivered, in particular to piggy back such feedback information to the transmitted data packets (see paragraph [0095]) and further to create duplicate copies of packets and send them out simultaneously through the available interfaces (see paragraph [0131]).

Document EP 1 678 892 A1 describes sending of packets over multiple channels and removing duplicate packets by the receiver (see paragraph [0018] and Fig. 10). Document EP 1 383 284 A1 describes predicting QoS demand by a neuronal network (see paragraph [0018]).

Document CA 2 897 772 A1 teaches to prioritize data packets by encoding methods (see paragraph [0176]).

### SUMMARY

It is the object of the invention to provide a concept for improving resilience and quality of real-time applications in access bundling scenarios.

The invention is defined by the subject matter of independent claims 1 and 15. Further details are defined by the dependent claims 2-14.

A basic concept of the invention is to apply intelligent interface selection and packet duplication mechanisms, in particular by using a neuronal network, in access bundling scenarios to improve resilience and quality of real-time applications in such access bundling scenarios.

In order to describe the invention in detail, the following terms, abbreviations and notations will be used:
- UE:: user equipment, user device
- AP:: access point
- AAP:: access aggregation point
- AN:: access node
- NN:: neuronal network
- IP:: Internet protocol
- MOS:: Mean Opinion Score
- L1:: layer 1 (physical layer)
- L2:: layer 2 (data link layer)
- L3:: layer 3 (network layer)
- 5G:: fifth generation mobile network
- LTE:: Long Term Evolution

The communication systems, devices and methods described in the following may be based on bonding access links to one access channel, e.g. by using bonding servers. In fixed access networks for example, the data rates achievable by DSL depend on the length of the copper line between the residential gateway and the street cabinet or the central office. Very often the users are disappointed if they only get a data rate of a few Mbit/s. One approach to solve the situation is bonding of multiple DSL-lines. The data is distributed to several DSL-links by a gateway or similar device at the user side and encryptedly transferred by use of virtual private networks (VPN) to an entity in the network or at a remote location. There, the data are assembled to the original stream. In the opposite direction the method operates accordingly.

The connection can be a DSL connection, as for example xDSL like ADSL or VDSL. However, the connection is not limited to DSL but can also be any other broadband connection, in particular cable internet access, Wi-Fi or the like. Bundling can be performed for any fixed wired access technology and for any non-fixed, wireless access technology, e.g. 3G, 4G or 5G mobile networks or the like. The transfer or rather the corresponding split of the data over the bonding connections can be session based, flow based and/or IP packet based. On the user side, bundling can be performed, e.g. by using an access device such as an integrated access device (IAD). An integrated access device can for example be a DSL modem, a home gateway and/or a residential gateway. Mobile devices like smartphones etc. can also profit from the concept according to the disclosure described hereinafter. For example, using mobile devices, an LTE link can be bundled with a WLAN link.

The communication systems, devices and methods described in the following may use AAP (Access Aggregation Point) devices. Access aggregation point devices are the means by which connections are provided among multiple technologies such as DSL, cable, Ethernet and wireless links that are connected to corporate virtual private networks (VPNs), wide area networks and the Internet. Subscriber demand for high-speed services require the delivery of IP services regardless of the access medium. AAP devices are used to provide flexible and reliable configurations for diverse consumer needs supporting provision of millions of sessions.

The communication systems, devices and methods described in the following may apply scheduling of packets, e.g. by using a Neuronal Network, in order to improve the quality and availability of real-time applications. For that, tunnelling or non-tunneling bundling approaches can be used.

According to a first aspect, the invention relates to a bonding device for transmission of a plurality of data packets, the bonding device comprising: a plurality of access links for transmission of the data packets; and a processor comprising a scheduling module, configured to schedule a distribution of the plurality of data packets over the plurality of access links according to a scheduling scheme, wherein the processor is configured to provide the scheduling scheme based on determining which of the access links to select for transmission, whether to send duplications of a data packet over each of the selected access links and how many duplications to send over the selected access links and further which delay to apply for data packets sent over the selected access links.

The bonding device can be a bonding client transmitting the data packets e.g. towards a bonding server. Alternatively the bonding device can be a bonding server transmitting the data packets towards a bonding client or towards another bonding server or towards another network node. The bonding server can be a server operated by the network operator, e.g. the AAP or it can be a bonding server implemented along with the application server.

Such a bonding device includes a scheduling module to apply intelligent interface selection and packet duplication mechanisms to improve resilience and quality of real-time applications in access bundling scenarios. The scheduling decision may be dynamic, e.g. by using a dynamic mapping of packets to interfaces with respect to duplications and delay. This dynamic scheduling decision may be learned, e.g. by a previous data training phase, for example by using a neuronal network as described below. The scheduling decision may be performed online, e.g. by applying an adaptive algorithm for the scheduling or by using a neuronal network as described below that can learn from previous decisions.

In an implementation form of the bonding device, the scheduling module is configured to determine a link quality of a respective access link and to prioritize selection of access links based on their link qualities.

This provides the advantage that access links with with higher link quality can be used for high reliability transmission of data packets while access links with lower link quality can be used for low reliability transmission of data packets. To increase the quality of service, links of high link quality can be used as main links for transmission of data packets while links of low link quality can be additionaly used for duplicated packets, for example.

In an implementation form of the bonding device, the decision is based on one of the following measures: a call quality of the transmitted data packets, a Voice-over-IP (VoIP) quality of the transmitted data packets, an R-score value of the transmitted data packets, a Mean Opinion Score (MOS) of the transmitted data packets.

This provides the advantage that performing a decision based on one of these quality measures allows improving the quality of service transmitting the data packets. For example, when a call quality of a data packet is determined to be low, the scheduling module can decide to increase the number of duplications for such a data packet or decide to use high reliable access links for transmission or can decide to apply a small delay for transmitting such a data packet in order to increase the call quality of the transmitted data packet.

In an implementation form of the bonding device, the processor is configured to transmit duplications of a data packet according to the scheduling scheme over at least one access link of the plurality of access links.

This provides the advantage that when a packet is duplicated and duplicated versions of the data packet are transmitted over one or more access links, the transmission reliability of such a data packet can be improved.

In an implementation form of the bonding device, the decision is based on a payload type of the data packets.

This provides the advantage that the scheduling module can inspect the payload type of such a packet, e.g. if the data packet is an audio or video data packet, if the packet is a real-time packet or a streaming packet, if the packet is used for signaling, for download or or for real-time communications. Depending on these scenarios, the scheduling module can decide to increase or decrease its transmission reliability.

In an implementation form of the bonding client, the decision is based on priorities assigned to the data packets.

This provides the advantage that packets with higher priorities can be delivered to a more reliable access link or an access link with less latency than packets with lower priorities. Packets with higher priorities can be duplicated to a higher number of duplications than packets with lower priorities to increase data throughput of such higher priority packets. Furthermore, delays of such higher priority packets can be reduced with respect to packets with lower priorities in order to improve transmission reliability and QoS.

In an implementation form of the bonding device, the decision is based on physical layer information, network layer information and/or application layer information retrieved from the plurality of access links.

This provides the advantage that the scheduling module can inspect from physical layer information data such as loss rate, bandwidth, signal quality, latency and modulation and coding scheme in order to improve the quality of the transmitted data packets. The scheduling module can inspect from network layer information data such as measured jitter and delay in order to improve the quality of the transmitted data packets. The scheduling module can inspect from application layer information data such as end-to-end packet loss and experienced end-to-end delay and jitter in order to improve the quality of the transmitted data packets.

In an implementation form of the bonding device, the physical layer information comprises at least one of the following: loss rate, bandwidth, signal quality, signal strength, signal-to-noise ratio (SNR), latency and modulation and coding scheme (MCS).

This provides the advantage that the scheduling module can use a plurality of information for deciding which of the access links to select for transmission, how many duplications of a data packet to send over each of the selected access links and which delay to apply for data packets sent over the selected access links in order to increase the quality of the transmitted data packets.

In an implementation form of the bonding device, the network layer information comprises at least one of the following: routing information, delay at the network layer and jitter at the network layer.

This provides the advantage that the scheduling module can optimize its scheduling decision when considering these routing information and delay and jitter at the network layer.

In an implementation form of the bonding device, the application layer information comprises at least one of the following: packet error rate at the application layer, delay at the application layer, jitter at the application layer, information about a used codec.

This provides the advantage that the scheduling module can optimize its scheduling decision when considering these packet error rates, delay and jitter at the application layer and the used codec.

In an implementation form of the bonding device, the processor comprises a neuronal network, configured to perform the scheduling scheme of the scheduler module.

This provides the advantage that the neuronal network can efficiently implement the scheduling module. The neuronal network can schedule a lot of traffic scenarios for such access bundling scenarios due to a flexible scalable model that can learn multiple scenarios in a training phase or in real-time and decide in real-time. The neuronal network can be implemented to increase quality of transmitted data packets and enhance reliability.

In an implementation form of the bonding device, the neuronal network is configured based on training data, wherein the training data comprises a mapping, e.g. a mapping of of packet error rates to weights, for specific data links of the plurality of data links. Packet error rate is just one example. The other metrics mentioned above can be included in the training data as well.

This provides the advantage that the neuronal network can efficiently learn the concrete access bundling scenario in order to reduce the overall packet error rates.

In an implementation form of the bonding device, the scheduling scheme is based on channel knowledge learned by the neuronal network during run-time.

This provides the advantage that reliabitity of data transmission in bundling scenarios can be improved when considering channel knowledge of the bundled transmission channel.

In an implementation form of the bonding device, the processor is configured to connect at least part of the plurality of access links based on IP tunneled or based on non-tunneled data transport.

This provides the advantage that different access links can be used either tunneled or non-tunneled for improving the reliability of data transmission.

According to a second aspect, the invention relates to a method for transmission of a plurality of data packets by a bonding device, the method comprising: scheduling a distribution of the plurality of data packets over a plurality of access links by the bonding device according to a scheduling scheme, wherein the processor is configured to provide the scheduling scheme based on determining which of the access links to select for transmission, whether to send duplications of a data packet to send over each of the selected access links and how many duplications to send over the selected access links and further which delay to apply for data packets sent over the selected access links; and transmitting the plurality of data packets via the plurality of access according to the scheduling scheme.

The bonding device can be a bonding client transmitting the data packets e.g. towards a bonding server. Alternatively the bonding device can be a bonding server transmitting the data packets towards a bonding client or towards another bonding server or towards another network node.

Such a method can apply intelligent interface selection and packet duplication mechanisms to improve resilience and quality of real-time applications in access bundling scenarios. The scheduling decision may be dynamic, e.g. by using a dynamic mapping of packets to interfaces with respect to duplications and delay. This dynamic scheduling decision may be learned, e.g. by a previous data training phase, for example by using a neuronal network as described below. The scheduling decision may be performed online, e.g. by applying an adaptive algorithm for the scheduling or by using a neuronal network as described below that can learn from previous decisions.

According to an example the invention relates to a communication system comprising a bonding client according to the first aspect or any implementation form of the first aspect which is connected via a plurality of access links to a bonding server.

According to an example the invention relates to a communication system comprising a bonding server according to the first aspect or any implementation form of the first aspect which is connected via a plurality of access links to a bonding client or to another bonding server or to another network node.

Such a communication system can apply intelligent interface selection and packet duplication mechanisms to improve resilience and quality of real-time applications in access bundling scenarios as described above.

### BRIEF DESCRIPTION OF THE DRAWINGS

Further embodiments of the invention will be described with respect to the following figures, in which:
Fig. 1 shows a schematic diagram of the functional architecture of a communication system 100 with a bonding server 220 and a bonding client 200 according to the disclosure.
Fig. 2 shows a schematic diagram illustrating a bonding device 200 according to the disclosure.
Fig. 3 shows a schematic diagram of a method 300 for transmission of data packets by a bonding device according to the disclosure.
Figs. 4a, 4b, 4c and 4d show schematic diagrams illustrating different examples of operation modes of a neuronal network.
Fig. 5 shows a schematic diagram illustrating a testbed setup for 2 Link measurements according to an implementation form.
Fig. 6 shows a schematic diagram illustrating a neuronal network 600 configured for a two-link connection of a bonding system according to an implementation form.

### DETAILED DESCRIPTION OF EMBODIMENTS

In the following detailed description, reference is made to the accompanying drawings, which form a part thereof, and in which is shown by way of illustration specific aspects in which the disclosure may be practiced. It is understood that other aspects may be utilized and structural or logical changes may be made without departing from the scope of the present disclosure. The following detailed description, therefore, is not to be taken in a limiting sense, and the scope of the present disclosure is defined by the appended claims.

It is understood that comments made in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

The access aggregation system (or access bundling system) as described hereinafter may include a plurality of different network entities or network nodes. A network entity or a network node may be a computer host or a computer server. A network entity or network node may be a hardware unit, e.g. a computer server, a network device, a PC, a tablet, a smartphone, a router, a gateway or a whole computer network. A network entity or a network node may be a software unit, e.g. an application program or software module on a PC, tablet, smartphone or any other hardware device.

The access aggregation (or bundling) system may be implemented by various technologies, in particular utilizing communication networks based on mobile communication standards such as LTE, in particular LTE-A and/or OFDM and successor standards such as 5G or alternatively or additionally based on fixed networks such as DSL access networks, ISDN POTS, etc. The components and network nodes of such an access aggregation system may be implemented as electronic devices or electronic network entities. The described devices and network entities may include integrated circuits and/or passives and may be manufactured according to various technologies. For example, the circuits may be designed as logic integrated circuits, analog integrated circuits, mixed signal integrated circuits, optical circuits, memory circuits and/or integrated passives.

The devices, systems and methods as described in the following may evaluate R-Score values or Mean Opinion Score (MOS) values.

Quality of Experience (QoE) is the most important performance metric from a user's point of view. QoE is a generic exression describing the experienced quality of any service. For VoIP services QoE is for instance expressd by the MOS or R-Score value. To measure QoE, the International Telecommunication Union (ITU)-T E-Model provides an algorithm to estimate the quality of a voice signal based on different parameters and aspects of voice quality impairment. The R-score considers these aspects and expresses the voice quality on a scale between 0 and 100, The R-score is given by: R=100-Iₛ-I_{d}-I_{ef}+A, where R denotes the R-score, Iₛ denotes signal-to-noise impairment associated with typical circuit-switched network paths score, I_{d} denotes the delay (mouth-to-ear impairment), I_{ef} denotes the equipment impairment factor that comprises impairments comprised by low bit rate codec and packet loss and A denotes the expectation factor that expresses those intangible quantities that are difficult to quantify.

The MOS can be calculated from the R-score according to the following table as shown by Tamosoft, www.tamos.com: "Monitoring and Troubleshooting VoIP Networks with a Network Analyzer":

**Table 1: Mapping of R-score to MOS**

| **User Satisfaction Level** | **MOS** | **R-Factor** |
|---|---|---|
| Maximum using G.711 | 4.4 | 93 |
| Very satisfied | 4.3-5.0 | 90-100 |
| Satisfied | 4.0-4.3 | 80-90 |
| Some users satisfied | 3.6-4.0 | 70-80 |
| Many users dissatisfied | 3.1-3.6 | 60-70 |
| Nearly all users dissatisfied | 2.6-3.1 | 50-60 |
| Not recommended | 1.0-2.6 | Less than 50 |

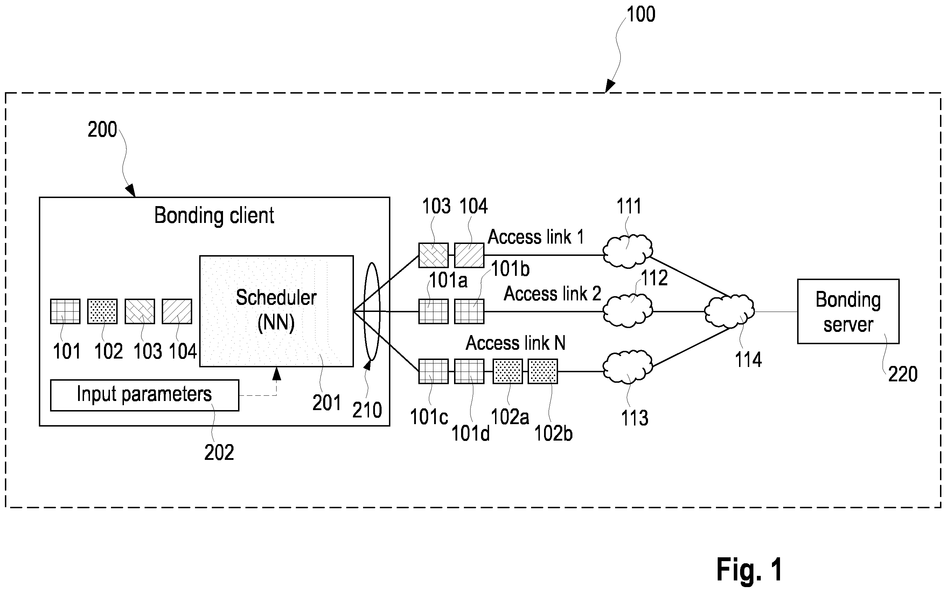

Fig. 1 shows a schematic diagram of the functional architecture of a communication system 100 with a bonding server 220 and a bonding client 200 according to the disclosure.

This communication system 100 improves the quality of real-time multimedia applications in access bundling scenarios as described in the following. The generic architecture as shown in Figure 1 includes a bonding client 200 and a bonding server 220. The bonding client 200 may include a mobile device (e.g. smartphone), a DSL router, etc. and may have multiple access interfaces, e.g. two or more. The bonding server 220 may include an application server in the Internet or a bonding proxy (e.g. Hybrid Access Aggregation Point). Each access interface 210 of the bonding client 200 may be connected with the bonding server 220 (e.g. using IP tunnels or non-tunneled connections). Figure 1 displays the scheduling process in uplink direction, meaning that the bonding client 200 transmits packets 101, 102, 103, 104 towards the bonding server 220. The downlink works very similar and is therefore not shown.

The core of the system 100 is the scheduler module 201. This module 201 decides about how to distribute the data packets 101, 102, 103, 104 over the available access links 210.

In contrast to other approaches in this area the bonding client 200 aims not to improve the overall throughput of the system 100 but the quality of the service. Therefore packet duplications, e.g. packet 101 duplicated to packets 101a, 101b, 101c, 101d; packet 102 duplicated to packets 102a, 102b, are used which improves, especially on lossy channels, the probability that a packet will be transmitted successfully. For that purpose the scheduler module 201 has three main tasks: 1) to decide which access links 210 to use; 2) to decide how many duplications 101a, 101b, 101c, 101d of the original packet 101 to be sent over each of these links 210; and 3) to decide to artificially delay packets on specific links in order to compensate latency differences between different access links, thereby reduding delay jitter.

In the example shown in Figure 1 the bonding client 200 transmits an exemplary number of four data packets 101, 102, 103, 104. These packets 101, 102, 103, 104 have differently sampled fillings indicating that they belong to different applications. The first 101 and the second 102 packets belong to loss sensitive applications and are duplicated. The second packet 102 is duplicated once, to duplicated packets 102a, 102b and both packets 102a, 102b are sent over link N. The first packet 101 is copied three times, to duplicated packets 101a, 101b, 101c, 101d. Two packets 101c, 101d are sent over link N and two packets 101a, 101b are sent over link 2 in this example. The third 103 and the fourth 104 packet are not loss-sensitive and are therefore not duplicated but are sent out via link 1.

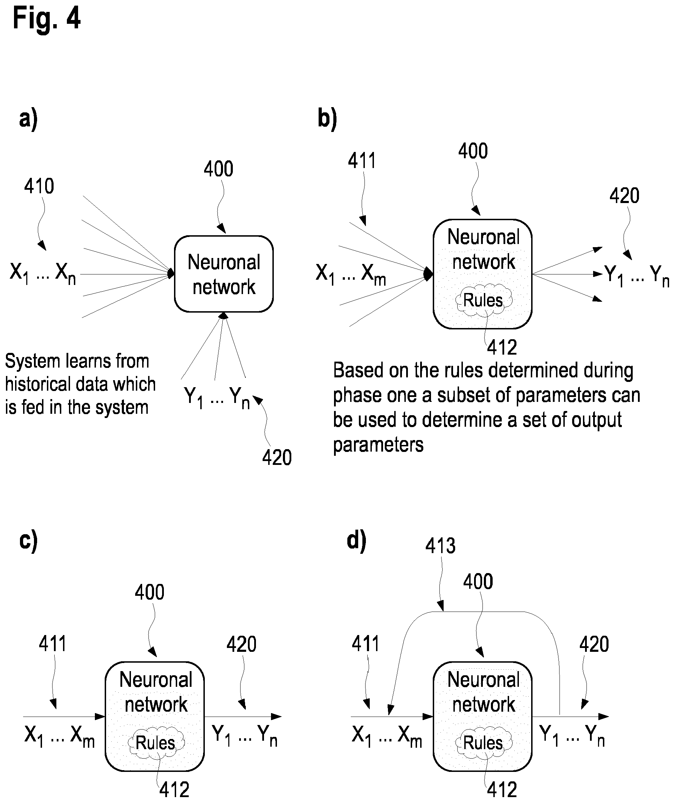

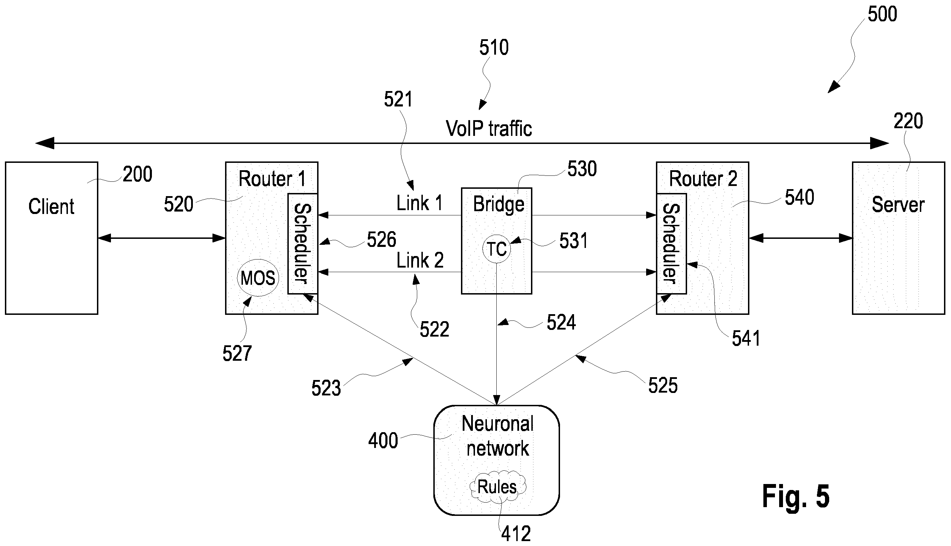

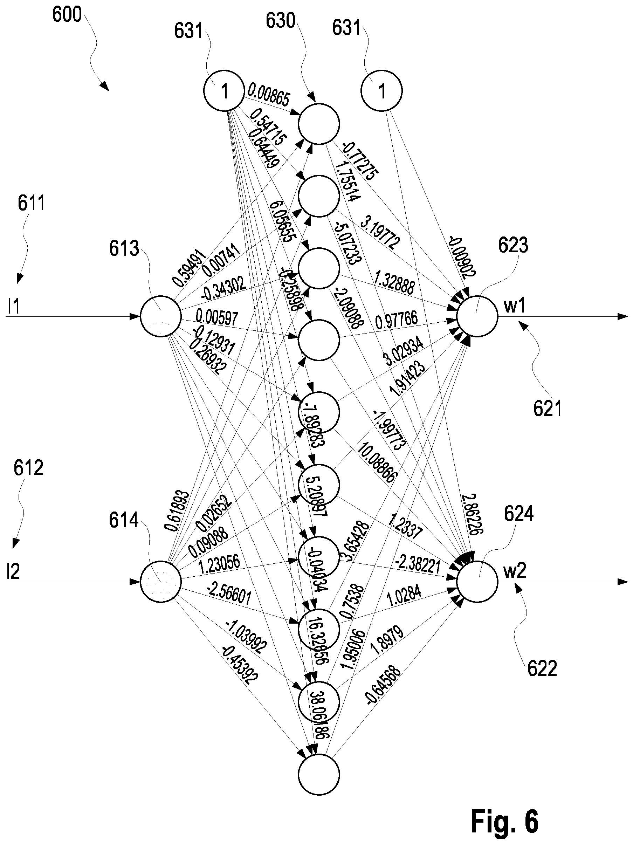

The decisions to be performed by the scheduler 201 may be processed by using a neuronal network (NN), e.g. a neuronal network 400 as described below with respect to Figures 4 and 5 or a neuronal network 600 as described below with respect to Figure 6. The NN can use information from different layers as input. A list of possible input parameters 202 can be found in the following: Physical layer information from the access links 210, e.g. loss, bandwidth, signal quality, latency, modulation coding scheme (MCS), etc.; Network layer information, e.g. measured delay and jitter; Application layer information, e.g. end to end packet loss and the delay and jitter experienced.

The communication path can also be in reverse direction, i.e. from the bonding server 220 to the bonding client 200, where another scheduler can be implemented in the bonding server 220 for scheduling distribution of data packets via available access links for transmission to the bonding client 200.

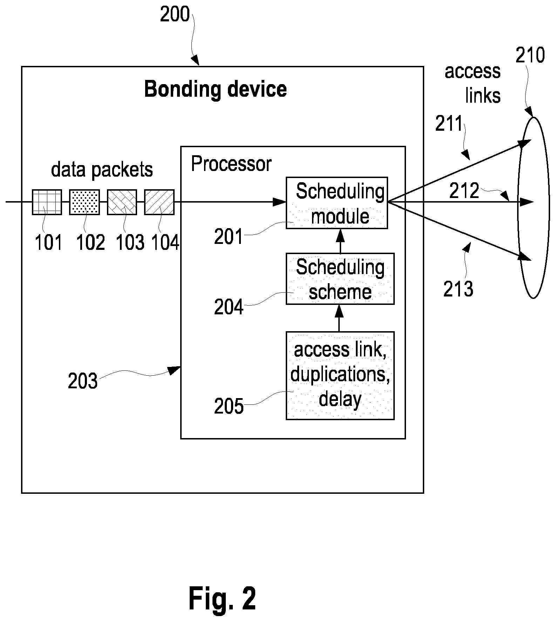

Fig. 2 shows a schematic diagram illustrating a bonding device 200 according to the disclosure. The bonding device 200 may be a bonding client 200 as depicted in Fig. 1 or a bonding server 220 as depicted in Fig. 1. The bonding device 200 may be implemented in a communication system 100 as described above with respect to Fig. 1. The bonding device 200 can be used for transmission of a plurality of data packets 101, 102, 103, 104, e.g. towards a bonding server 220 when the bonding device 200 is a bonding client or towards a bonding client when the bonding device is a bonding server, e.g. as described above with respect to Fig. 1. The bonding device 200 includes a plurality of access links 210 or also named access interfaces for connection with the bonding server 220 or alternatively with the bonding client when the bonding device is a bonding server; and a processor 203 including a scheduling module 201.

The scheduling module 201 is configured to schedule a distribution of the plurality of data packets 101, 102, 103, 104 over the plurality of access links 210 according to a scheduling scheme 204. For example the plurality of access links 210 may include an exemplary number of N access links 211, 212, 213 as shown in Fig. 2. The scheduling scheme 204 is based on a decision 205 which of the access links 211, 212, 213 to select for transmission, how many duplications 101a, 101b, 101c, 101d of a data packet 101, 102, 103, 104 to send over each of the selected access links 211, 212, 213 and which delay to apply for data packets 101, 102, 103, 104 sent over the selected access links 211, 212, 213.

The scheduling module 201 may be configured to determine a link quality of a respective access link 211, 212, 213 and to prioritize selection of access links 211, 212, 213 based on their link qualities.

The decision may be based on one of the following measures: a call quality of the transmitted data packets, a Voice-over-IP (VoIP) quality of the transmitted data packets, an R-score value of the transmitted data packets, a Mean Opinion Score (MOS) of the transmitted data packets 101, 102, 103, 104.

The processor 203 may be configured to transmit duplications 101a, 101b, 101c, 101d of a data packet 101 according to the scheduling scheme 204 over at least one access link 211, 212, 213 of the plurality of access links 210, e.g. as described above with respect to Fig. 1.

The decision may be based on a payload type of the data packets 101, 102, 103, 104. The decision may be based on priorities assigned to the data packets 101, 102, 103, 104. The decision may be based on physical layer information, network layer information and/or application layer information retrieved from the plurality of access links 210.

The physical layer information may include at least one of the following: loss rate, bandwidth, signal quality, signal strength, signal-to-noise ratio (SNR), latency and modulation and coding scheme (MCS). The network layer information may include at least one of the following: routing information, delay at the network layer and jitter at the network layer. The application layer information may include at least one of the following: packet error rate at the application layer, delay at the application layer, jitter at the application layer, information about a used codec.

The processor 203 may include or may implement a neuronal network, e.g. a neuronal network 400 as described below with respect to Figures 4 and 5 or a neuronal network 600 as described below with respect to Figure 6, and may be configured to perform the scheduling scheme 204 of the scheduler module 201.

The neuronal network may be configured based on training data, e.g. as described below with respect to Fig. 4. The training data may include a mapping 515 of packet error rates 516 to weights 517 for specific data links of the plurality of data links 210, e.g. as described below with respect to Fig. 5.

The scheduling scheme 204 may be based on channel knowledge learned by the neuronal network 400 during run-time, e.g. as described below with respect to Figures 4, 5 and 6.

The processor 203 may be configured to connect at least part of the plurality of access links 210 with the bonding server 220 (or alternatively with the bonding client when the device is a bonding server) based on IP tunneled or based on non-tunneled data transport.

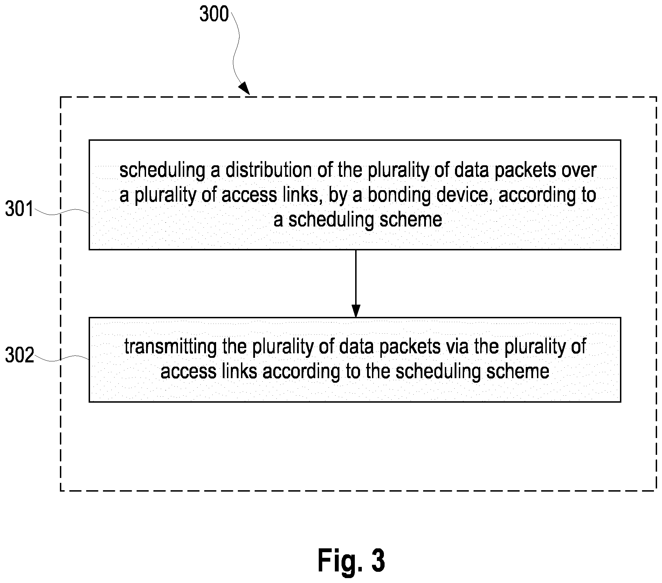

Fig. 3 shows a schematic diagram of a method 300 for transmission of data packets 101, 102, 103, 104 between a bonding client, e.g. a bonding client 200 as described above with respect to Fig. 2, and a bonding server, e.g. a bonding server 220 as described above with respect to Fig. 2, or vice versa according to the disclosure.

The method 300 includes scheduling 301 a distribution of the plurality of data packets 101, 102, 103, 104 over a plurality of access links 210, by a bonding device, between the bonding client 200 and the bonding server 220 or vice versa according to a scheduling scheme 204, e.g. according to the functionality of the scheduling module 201 described above with respect to Figures 1 and 2. The scheduling scheme 204 is based on a decision which of the access links 211, 212, 213 to select for transmission, how many duplications 101a, 101b, 101c, 101d of a data packet 101 to send over each of the selected access links 211, 212, 213 and which delay to apply for data packets sent over the selected access links 211, 212, 213. The method 300 further includes transmitting 302 the plurality of data packets 101, 102, 103, 104 via the plurality of access links 210 between the bonding client 200 and the bonding server 220 or vice versa according to the scheduling scheme 204, e.g. described above with respect to Figures 1 and 2.

Figs. 4a, 4b, 4c and 4d show schematic diagrams illustrating different examples of operation modes of a neuronal network 400.

Figure 4a illustrates a training phase 400a of the neuronal network 400. The system, i.e. the neuronal network 400 learns from historical data 410, i.e. input parameters x₁, ..., xₘ which which is fed into the system. A certain mapping between input parameters x₁, ..., xₘ and output parameters Y₁, ..., Yₘ is learned or adaptively adjusted by the neuronal network 400. Then the system is able to map input parameters 410 to output parameters 411.

Figure 4b illustrates an execution phase 400b of the neuronal network 400. The neuronal network 400 includes a set of rules 412 resulting from a previous training phase 400a. This set of rules 412 provides the mapping from input parameters x₁, ..., xₘ 411 to output parameters Y₁, ..., Yₘ 412. Based on the rules 412 determined during the training phase 400a, a subset 411 of the input parameters 410 can be used to determine a set of output parameters 412. Also non-learned input parameters can be mapped to output parameters, e.g. based on interpolation or approximation.

Figure 4c illustrates an independent operation mode of the neuronal network 400. The system works well with input parameters x₁, ..., xₘ 411 which are independent of the output parameters Y₁, ..., Yₙ 420. There may be applied a different number of input parameters 411 and output parameters 420 to the neuronal network 400. There is no feedback from output parameters 420 to input parameters 411. The mapping from input parameters 411 to output parameters 420 is based on a set of rules 412 learned or processed by the neuronal network 400 during the training phase 400a described above with respect to Fig. 4a.

Figure 4d illustrates a dependent operation mode of the neuronal network 400. For systems with input parameters x₁, ..., xₘ 411 that dependend on the output parameters Y₁, ..., Yₙ 420, e.g. changing an output parameter changes the input parameter, the learning process 400b as described above with respect to Fig. 4b, may be more complicated. As for the independent system 400c, there may be applied a different number of input parameters 411 and output parameters 420 to the neuronal network 400. Training may be performed for different feedbacks 413 from output parameters 420 to input parameters 411.

Fig. 5 shows a schematic diagram illustrating a testbed 500 for two-Link measurements according to an implementation form.

The testbed 500 includes a bonding client 200, e.g. as described above with respect to Figures 1 and 2, and a bonding server 220. The communication path from the bonding client 200 is directed towards a first router 520 including a scheduler 526 and a MOS (Mean Opinion Score) module 527. The first router 520 routes the communication, e.g. a Voice-over-IP traffic 510 according to the scheduler 526 via a first path or first link 521 and a second path or second link 522 towards a bridge 530 having a traffic control (TC) function 531. The bridge 530 forwards the communication traffic towards a second router 540 having a scheduler 541 for scheduling the communication traffic. The second router aggregates both communication links 521, 522 to a single link that is routed to the bonding server 220. All three network elements, i.e. first router 520, bridge 530 and second router 540 are adjusted by a neuronal network 400, e.g. a neuronal network 400 as described above with respect to Figures 4 to 6. The neuronal network 400 uses a set of rules 412 for mapping input parameters, e.g. packet loss on first link 521 and second link 522, e.g. in percentage, to output parameters, e.g. weights of first link 521 and second link 522. Table 2 illustrates an exemplary mapping table for such a two-link connection.

**Table 2: exemplary mapping of a neuronal network for a two-link connection**

| Packet loss on L1 [%] | Packet loss on L2 [%] | Weight of L1 | Weight of L2 |
|---|---|---|---|
| 0 | 0 | 1 | 0 |
| 0 | 5 | 1 | 0 |
| 5 | 5 | 2 | 0 |
| 10 | 10 | 3 | 0 |
| 20 | 0 | 0 | 1 |
| 20 | 20 | 4 | 0 |
| 30 | 10 | 0 | 3 |
| 40 | 20 | 0 | 4 |
| 50 | 40 | 0 | 6 |
| 50 | 50 | 7 | 0 |

A similar scheduling applies for the reverse direction, i.e. the communication path from bonding server 220 to bonding client 200. However, a different mapping with different weights can apply for the reverse direction.

Fig. 6 shows a schematic diagram illustrating a neuronal network 600 configured for a two-link connection of a bonding system, e.g. of the bonding system setup 500 described above with respect to Fig. 5.

The neuronal network 600 includes an exemplary number of 10 hidden nodes 630 and one hidden layer 631. The first input link 611 is connected with a first input node 613, the second input link 612 is connected with a second input node 614. The first input node 613 and the second input node 614 are connected via the hidden nodes 630 and the hidden layer 631 with a first output node 623 and a second output node 624 which provide the first weight w1 and the second weight w2, respectively. Each node may provide weighted connections with other nodes that may be adaptively adjusted to learn the corresponding bundling scenario.

The methods, systems and devices described herein may be implemented as electrical and/or optical circuit within a chip or an integrated circuit or an application specific integrated circuit (ASIC). The invention can be implemented in digital and/or analogue electronic and optical circuitry.

The methods, systems and devices described herein may be implemented as software in a Digital Signal Processor (DSP), in a micro-controller or in any other side-processor or as hardware circuit within an application specific integrated circuit (ASIC) of a Digital Signal Processor (DSP).

The invention can be implemented in digital electronic circuitry, or in computer hardware, firmware, software, or in combinations thereof, e.g. in available hardware of conventional optical transceiver devices or in new hardware dedicated for processing the methods described herein.

The present disclosure also supports a computer program product including computer executable code or computer executable instructions that, when executed, causes at least one computer to execute the performing and computing steps described herein, in particular the method 300 as described above with respect to Fig. 3 and the techniques described above with respect to Figs. 1-2 and 4-5. Such a computer program product may include a readable non-transitory storage medium storing program code thereon for use by a computer. The program code may perform the methods and techniques as described above with respect to Figures 1 to 5.

While a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other. The scope of the protection is defined by the claims.

## Claims

1. A bonding device (200) for transmission of a plurality of data packets (101, 102, 103, 104), the bonding device (200) comprising:
a plurality of access links (210) for transmission of the plurality of data packets (101, 102, 103, 104);
a processor (203) comprising a scheduling module (201), configured to schedule a distribution of the plurality of data packets (101, 102, 103, 104) over the plurality of access links (210) according to a scheduling scheme (204),
wherein the processor (203) is configured to provide the scheduling scheme (204) based on determining (205) which of the access links (211, 212, 213) to select for transmission, whether to send duplications (101a, 101b, 101c, 101d) of a data packet (101, 102, 103, 104) over each of the selected access links (211, 212, 213) and how many duplications to send over the selected access links and further which delay to apply for data packets (101, 102, 103, 104) sent over the selected access links (211, 212, 213).

2. The bonding device (200) of claim 1,
wherein the scheduling module (201) is configured to determine a link quality of a respective access link (211, 212, 213) and to prioritize selection of access links (211, 212, 213) based on their link qualities.

3. The bonding device (200) of claim 1 or 2,
wherein the decision is based on one of the following measures: a call quality of the transmitted data packets, a Voice-over-IP (VoIP) quality of the transmitted data packets, an R-score value of the transmitted data packets, a Mean Opinion Score (MOS) of the transmitted data packets (101, 102, 103, 104).

4. The bonding device (200) of one of the preceding claims,
wherein the processor (203) is configured to transmit duplications (101a, 101b, 101c, 101d) of a data packet (101) according to the scheduling scheme (204) over at least one access link (211, 212, 213) of the plurality of access links (210).

5. The bonding device (200) of one of the preceding claims,
wherein the decision is based on a payload type of the data packets (101, 102, 103, 104).

6. The bonding device (200) of one of the preceding claims,
wherein the decision is based on priorities assigned to the data packets (101, 102, 103, 104).

7. The bonding device (200) of one of the preceding claims,
wherein the decision is based on physical layer information, network layer information and/or application layer information retrieved from the plurality of access links (210).

8. The bonding device (200) of claim 7,
wherein the physical layer information comprises at least one of the following: loss rate, bandwidth, signal quality, signal strength, signal-to-noise ratio (SNR), latency and modulation and coding scheme (MCS).

9. The bonding device (200) of claim 7 or 8,
wherein the network layer information comprises at least one of the following: routing information, delay at the network layer and jitter at the network layer.

10. The bonding device (200) of one of claims 7 to 9,
wherein the application layer information comprises at least one of the following: packet error rate at the application layer, delay at the application layer, jitter at the application layer, information about a used codec.

11. The bonding device (200) of one of the preceding claims,
wherein the processor (203) comprises a neuronal network (400), configured to perform the scheduling scheme (204) of the scheduler module (201).

12. The bonding device (200) of claim 11,
wherein the neuronal network (400) is configured based on training data, wherein the training data comprises a mapping (515) of packet error rates (516) to weights (517) for specific data links of the plurality of data links (210).

13. The bonding device (200) of claim 11 or 12,
wherein the scheduling scheme (204) is based on channel knowledge learned by the neuronal network (400) during run-time.

14. The bonding device (200) of one of the preceding claims,
wherein the processor (203) is configured to connect at least part of the plurality of access links (210) based on IP tunneled or based on non-tunneled data transport.

15. A method (300) for transmission of a plurality of data packets between a bonding client and a bonding server, the method comprising:
scheduling (301) a distribution of the plurality of data packets (101, 102, 103, 104) over a plurality of access links (210) between the bonding client (200) and the bonding server (220) according to a scheduling scheme (204);
providing the scheduling scheme (204) based on determining which of the access links (211, 212, 213) to select for transmission, whether to send duplications (101a, 101b, 101c, 101d) of a data packet (101) over each of the selected access links (211, 212, 213) and how many duplications to send over the selected access links and further which delay to apply for data packets sent over the selected access links (211, 212, 213); and
transmitting (302) the plurality of data packets (101, 102, 103, 104) via the plurality of access (210) between the bonding client (200) and the bonding server (220) or vice versa according to the scheduling scheme (204).

## Patentansprüche

1. Verbindungsvorrichtung (200) zum Übertragen einer Vielzahl von Datenpaketen (101, 102, 103, 104), wobei die Verbindungsvorrichtung (200) Folgendes umfasst:
eine Vielzahl von Zugangsverbindungen (210) zum Übertragen der Vielzahl von Datenpaketen (101, 102, 103, 104);
einen Prozessor (203) mit einem Planungsmodul (201), konfiguriert zum Planen einer Verteilung der Vielzahl von Datenpaketen (101, 102, 103, 104) über die Vielzahl von Zugangsverbindungen (210) gemäß einem Planungsschema (204),
wobei der Prozessor (203) konfiguriert ist zum Bereitstellen des Planungsschemas (204) basierend auf dem Bestimmen (205), welche der Zugangsverbindungen (211, 212, 213) zur Übertragung auszuwählen sind, ob Duplikationen (101a, 101b, 101c, 101d) eines Datenpakets (101, 102, 103, 104) über jede der gewählten Zugangsverbindungen (211, 212, 213) zu senden sind und wie viele Duplikationen über die gewählten Zugangsverbindungen zu senden sind und darüber hinaus, welche Verzögerung für Datenpakete (101, 102, 103, 104) anzuwenden ist, die über die gewählten Zugangsverbindungen (211, 212, 213) gesendet werden.

2. Verbindungsvorrichtung (200) nach Anspruch 1,
wobei das Planungsmodul (201) konfiguriert ist zum Bestimmen einer Verbindungsqualität einer jeweiligen Zugangsverbindung (211, 212, 213) und zum Priorisieren der Auswahl von Zugangsverbindungen (211, 212, 213) basierend auf ihren Verbindungsqualitäten.

3. Verbindungsvorrichtung (200) nach Anspruch 1 oder 2,
wobei die Entscheidung auf einer der folgenden Maßnahmen basiert: einer Anrufqualität der übertragenen Datenpakete, einer Voice-over-IP-Qualität (VoIP-Qualität) der übertragenen Datenpakete, einem R-Score-Wert der übertragenen Datenpakete, einem Mean Opinion Score (MOS) der übertragenen Datenpakete (101, 102, 103, 104).

4. Verbindungsvorrichtung (200) nach einem der vorhergehenden Ansprüche, wobei der Prozessor (203) konfiguriert ist zum Übertragen von Duplikationen (101a, 101b, 101c, 101d) eines Datenpakets (101) gemäß dem Planungsschema (204) über mindestens eine Zugangsverbindung (211, 212, 213) der Vielzahl von Zugangsverbindungen (210).

5. Verbindungsvorrichtung (200) nach einem der vorhergehenden Ansprüche, wobei die Entscheidung auf einem Nutzlasttyp der Datenpakete (101, 102, 103, 104) basiert.

6. Verbindungsvorrichtung (200) nach einem der vorhergehenden Ansprüche, wobei die Entscheidung auf Prioritäten basiert, die den Datenpaketen (101, 102, 103, 104) zugewiesen sind.

7. Verbindungsvorrichtung (200) nach einem der vorhergehenden Ansprüche, wobei die Entscheidung auf Informationen der physikalischen Schicht, Informationen der Netzwerkschicht und/oder Informationen der Anwendungsschicht basiert, die von der Vielzahl von Zugangsverbindungen (210) abgerufen werden.

8. Verbindungsvorrichtung (200) nach Anspruch 7, wobei die Informationen der physikalischen Schicht mindestens eine der folgenden umfassen: Verlustrate, Bandbreite, Signalqualität, Signalstärke, Signal-Rausch-Verhältnis (SNR), Latenz und Modulations- und Codierschema (MCS).

9. Verbindungsvorrichtung (200) nach Anspruch 7 oder 8,
wobei die Informationen der Netzwerkschicht mindestens eine der folgenden umfassen: Routinginformationen, Verzögerung auf der Netzwerkschicht und Jitter auf der Netzwerkschicht.

10. Verbindungsvorrichtung (200) nach einem der Ansprüche 7 bis 9, wobei die Informationen der Anwendungsschicht mindestens eine der folgenden umfassen: Paketfehlerrate auf der Anwendungsschicht, Verzögerung auf der Anwendungsschicht, Jitter auf der Anwendungsschicht, Informationen über einen verwendeten Codec.

11. Verbindungsvorrichtung (200) nach einem der vorhergehenden Ansprüche, wobei der Prozessor (203) ein neuronales Netzwerk (400) umfasst, das konfiguriert ist zum Durchführen des Planungsschemas (204) des Planungsmoduls (201).

12. Verbindungsvorrichtung (200) nach Anspruch 11,
wobei das neuronale Netzwerk (400) basierend auf Trainingsdaten konfiguriert ist, wobei die Trainingsdaten eine Abbildung (515) von Paketfehlerraten (516) auf Gewichtungen (517) für spezifische Datenverbindungen der Vielzahl von Datenverbindungen (210) umfassen.

13. Verbindungsvorrichtung (200) nach Anspruch 11 oder 12, wobei das Planungsschema (204) auf Kanalwissen basiert, das von dem neuronalen Netzwerk (400) während der Laufzeit gelernt wird.

14. Verbindungsvorrichtung (200) nach einem der vorhergehenden Ansprüche, wobei der Prozessor (203) konfiguriert ist zum Verbinden mit mindestens einem Teil der Vielzahl von Zugangsverbindungen (210) basierend auf IP-getunneltem oder basierend auf nichtgetunneltem Datentransport.

15. Verfahren (300) zum Übertragen einer Vielzahl von Datenpaketen zwischen einem Verbindungs-Client und einem Verbindungs-Server, wobei das Verfahren Folgendes umfasst:
Planen (301) einer Verteilung der Vielzahl von Datenpaketen (101, 102, 103, 104) über eine Vielzahl von Zugangsverbindungen (210) zwischen dem Verbindungs-Client (200) und dem Verbindungs-Server (220) gemäß einem Planungsschema (204);
Bereitstellen des Planungsschemas (204) basierend auf dem Bestimmen, welche der Zugangsverbindungen (211, 212, 213) zur Übertragung auszuwählen sind, ob Duplikationen (101a, 101b, 101c, 101d) eines Datenpakets (101) über jede der gewählten Zugangsverbindungen (211, 212, 213) zu senden sind und wie viele Duplikationen über die gewählten Zugangsverbindungen zu senden sind und darüber hinaus, welche Verzögerung für Datenpakete anzuwenden ist, die über die gewählten Zugangsverbindungen (211, 212, 213) gesendet werden; und
Übertragen (302) der Vielzahl von Datenpaketen (101, 102, 103, 104) über die Vielzahl von Zugangsverbindungen (210) zwischen dem Verbindungs-Client (200) und dem Verbindungs-Server (220) gemäß einem Planungsschema (204).

## Revendications

1. Dispositif de liaison (200) pour la transmission d'une pluralité de paquets de données (101, 102, 103, 104), le dispositif de liaison (200) comprenant :
une pluralité de liaisons d'accès (210) pour la transmission de la pluralité de paquets de données (101, 102, 103, 104) ;
un processeur (203) comprenant un module de planification (201), configuré pour planifier une distribution de la pluralité de paquets de données (101, 102, 103, 104) sur la pluralité de liaisons d'accès (210) selon un schéma de planification (204),
dans lequel le processeur (203) est configuré pour fournir le schéma de planification (204) sur la base de la détermination (205) de la liaison d'accès (211, 212, 213) à sélectionner pour la transmission, si des duplications (101a, 101b, 101c, 101d) d'un paquet de données (101, 102, 103, 104) sont à envoyer ou non sur chacune des liaisons d'accès sélectionnées (211, 212, 213) et du nombre de duplications à envoyer sur les liaisons d'accès sélectionnées et en outre du délai à appliquer pour des paquets de données (101, 102, 103, 104) envoyés sur les liaisons d'accès (211, 212, 213) sélectionnées.

2. Dispositif de liaison (200) selon la revendication 1,
dans lequel le module de planification (201) est configuré pour déterminer une qualité de liaison d'une liaison d'accès respective (211, 212, 213) et pour prioriser la sélection de liaisons d'accès (211, 212, 213) sur la base de leurs qualités de liaison.

3. Dispositif de liaison (200) selon la revendication 1 ou 2,
dans lequel la décision est basée sur l'une des mesures suivantes : une qualité d'appel des paquets de données transmis, une qualité de voix sur IP (VoIP) des paquets de données transmis, une valeur de score R des paquets de données transmis, une note moyenne d'opinion (MOS) des paquets de données transmis (101, 102, 103, 104) .

4. Dispositif de liaison (200) selon l'une quelconque des revendications précédentes,
dans lequel le processeur (203) est configuré pour transmettre des duplications (101a, 101b, 101c, 101d) d'un paquet de données (101) selon le schéma de planification (204) sur au moins une liaison d'accès (211, 212, 213) de la pluralité de liaisons d'accès (210) .

5. Dispositif de liaison (200) selon l'une quelconque des revendications précédentes,
dans lequel la décision est basée sur un type de charge utile des paquets de données (101, 102, 103, 104) .

6. Dispositif de liaison (200) selon l'une quelconque des revendications précédentes,
dans lequel la décision est basée sur des priorités attribuées aux paquets de données (101, 102, 103, 104).

7. Dispositif de liaison (200) selon l'une quelconque des revendications précédentes,
dans lequel la décision est basée sur des informations de couche physique, des informations de couche réseau et/ou des informations de couche application extraites de la pluralité de liaisons d'accès (210).

8. Dispositif de liaison (200) selon la revendication 7,
dans lequel les informations de couche physique comprennent au moins l'un des éléments suivants : un taux de perte, une largeur de bande, une qualité de signal, une intensité de signal, un rapport signal/bruit (SNR), une latence et un schéma de modulation et de codage (MCS).

9. Dispositif de liaison (200) selon la revendication 7 ou 8,
dans lequel les informations de couche réseau comprennent au moins l'un des éléments suivants : des informations d'acheminement, un retard au niveau de la couche réseau et une instabilité au niveau de la couche réseau.

10. Dispositif de liaison (200) selon l'une quelconque des revendications 7 à 9,
dans lequel les informations de couche application comprennent au moins l'un des éléments suivants : un taux d'erreur de paquet au niveau de la couche application, un retard au niveau de la couche application, une instabilité au niveau de la couche application, des informations concernant un codec utilisé.

11. Dispositif de liaison (200) selon l'une quelconque des revendications précédentes,
dans lequel le processeur (203) comprend un réseau neuronal (400), configuré pour effectuer le schéma de planification (204) du module de planification (201).

12. Dispositif de liaison (200) selon la revendication 11,
dans lequel le réseau neuronal (400) est configuré sur la base de données d'apprentissage, dans lequel les données d'apprentissage comprennent un mappage (515) des taux d'erreur de paquet (516) sur des pondérations (517) pour des liaisons de données spécifiques de la pluralité de liaisons de données (210).

13. Dispositif de liaison (200) selon la revendication 11 ou 12,
dans lequel le schéma de planification (204) est basé sur une connaissance de canal apprise par le réseau neuronal (400) pendant l'exécution.

14. Dispositif de liaison (200) selon l'une quelconque des revendications précédentes,
dans lequel le processeur (203) est configuré pour connecter au moins une partie de la pluralité de liaisons d'accès (210) sur la base d'un transport de données tunnellisé IP ou non tunnellisé.

15. Procédé (300) pour la transmission d'une pluralité de paquets de données entre un client de liaison et un serveur de liaison, le procédé comprenant les étapes consistant à :
planifier (301) une distribution de la pluralité de paquets de données (101, 102, 103, 104) sur une pluralité de liaisons d'accès (210) entre le client de liaison (200) et le serveur de liaison (220) selon un schéma de planification (204) ;
fournir le schéma de planification (204) sur la base de la détermination de la liaison d'accès (211, 212, 213) à sélectionner pour la transmission, si des duplications (101a, 101b, 101c, 101d) d'un paquet de données (101) sont à envoyer ou non sur chacune des liaisons d'accès sélectionnées (211, 212, 213) et du nombre de duplications à envoyer sur les liaisons d'accès sélectionnées et en outre du délai à appliquer pour les paquets de données envoyés sur les liaisons d'accès sélectionnées (211, 212, 213) ; et
transmettre (302) la pluralité de paquets de données (101, 102, 103, 104) par l'intermédiaire de la pluralité d'accès (210) entre le client de liaison (200) et le serveur de liaison (220) ou vice versa selon le schéma de planification (204).
